# EUROPÄISCHE PATENTSCHRIFT

(11) **EP 0 685 664 B1**
(45) Veröffentlichungstag und Bekanntmachung des Hinweises auf die Patenterteilung: **14.02.2001**
(21) Anmeldenummer: 95108062.1
(22) Anmeldetag: 26.05.1995
(51) Int. Cl.: F16H 59/02

(54) **Schaltvorrichtung für ein automatisches Getriebe**
Shift control mechanism for an automatic transmission
Dispositif de commande de changement de rapport pour transmission automatique

(30) Priorität: 01.06.1994 DE 4419212
(43) Veröffentlichungstag der Anmeldung: 06.12.1995
(73) Patentinhaber: ZF FRIEDRICHSHAFEN Aktiengesellschaft, 88038 Friedrichshafen (DE)
(72) Erfinder: Wolz, Udo, Dr., D-88045 Friedrichshafen (DE); Kuhn, Walter, D-88045 Friedrichshafen (DE); Frei, Walter, D-88045 Friedrichshafen (DE)

(56) Entgegenhaltungen:
- EP-A- 0 361 011
- EP-A- 0 589 145
- DE-A- 4 042 045
- US-A- 5 080 207
- ATZ AUTOMOBILTECHNISCHE ZEITSCHRIFT, STUTTGART, DE, Bd.94, Nr.9, 1. September 1992 Seiten 428 - 430, 432, XP000297447 WELTER A 'DIE ADAPTIVE GETRIEBESTEUERUNG FUER DIE AUTOMATIKGETRIEBE DER BMW FAHRZEUGE MIT ZWOELFZYLINDERMOTOR'

## Beschreibung

Die Erfindung bezieht sich auf eine Schaltvorrichtung für ein automatisches Getriebe eines Kraftfahrzeugs, mit einem Wählhebel, der in einer ersten Schaltgasse zwischen den Automatik-Wahlstufen verschwenkbar ist, und mit welchem die automatisch zu schaltenden Getriebegänge gemäß einem ersten Fahrprogramm vorwählbar sind vorzuwählen und der über eine Quergasse in eine H-förmige Schaltkulisse mit einer Wählgasse und weiteren Schaltgassen überführt werden kann, um die Gänge des Getriebes manuell zu schalten.

Aus der DE-A 37 17 675 ist eine Schaltvorrichtung für ein automatisches Getriebe bekanntgeworden, bei der der Wählhebel in zwei Schaltgassen verschwenkt werden kann. In einer ersten Schaltgasse sind die Wählstellungen P, R, N, D, 3, 2, 1 vorwählbar. Der Wählhebel kann über eine Quergasse in die zweite Schaltgasse überführt werden. Durch Längsverschwenken in dieser Schaltgasse sind die einzelnen Gänge des Getriebes manuell zu schalten. Eine vergleichbare Schaltvorrichtung ist aus der EP-B 0 331 797 ebenfalls bekannt.

Bei dem bekannten Vorschlag nach der EP-A 0 467 773 ist eine einzige Schaltgasse für die Positionen P (Parken), R (Rückwärts), N (Neutral), D (Drive), M (Manuell) und eine Hochschaltbegrenzungs-Automatikstufe 1 vorgesehen. Befindet sich der Wählhebel in seiner M-Wählposition, sind die Gänge des Getriebes durch Verschwenken des Wählhebels quer zur Schaltgasse manuell schaltbar.

Bei den vorstehend erläuterten Lösungen ist nachteilig, daß die absolute Gangposition nach mehreren manuellen Schaltungen (Tipp-Bewegungen) dem Fahrer nicht mehr bekannt ist. Um diesem Nachteil zu begegnen, ist eine visuelle Anzeige erforderlich. Ferner wird dem Fahrer kein haptisches Signal bei einer durchgeführten Gangschaltung vermittelt.

So ist aus der DE 40 42 045 A1 eine Schaltvorrichtung für ein Automatikgetriebe für ein Kraftfahrzeug bekannt, welche Führungsnuten zur Begrenzung der Bewegung des Schalthebels aufweist. Die Führungsnuten sind in Form eines oder mehrerer H-Schemata angeordnet, so daß der Schalthebel in mehreren parallelen Schaltgassen und in einer Quergasse bewegt werden kann. Dabei sind die manuell zu schaltenden Gangstufen in wenigstens zwei Schaltgassen und die Automatik-Wählstufen in einer weiteren Schaltgasse sowie der D- oder N-Bereich des Automatikgetriebes in der Quergasse vorgesehen.

Auch aus der gattungsbildenden JP-A 61-157855 ist eine Schaltvorrichtung für ein automatisches Getriebe bekannt, bei der der Schaltgasse zur Vorwahl der automatisch zu schaltenden Getriebegänge bzw. Fahrprogramme eine weitere Schaltkulisse zugeordnet ist. Diese Schaltkulisse ist H-förmig ausgebildet und bietet daher ebenso wie die Schaltvorrichtung der vorgenannten DE 40 42 045 A1 dem Fahrer das ihm von Handschaltgetrieben her gewohnte Bild. Für den Fahrer hat dies den Vorteil, daß er beim Wechsel von einem Fahrzeug mit Handschaltgetriebe auf ein Fahrzeug mit einem Automatgetriebe keine Umstellungsschwierigkeiten hat. Trotz dieses Vorteils gehen diese bekannten Lösungen über eine Aggregation einer Schaltgasse zur Anwahl der Automatik-Funktionen mit einer Schaltkulisse zur manuellen Gangwahl nicht hinaus.

Der vorliegenden Erfindung liegt die Aufgabe zugrunde, eine Schaltvorrichtung für ein automatisches Getriebe der eingangs genannten Art so auszubilden, daß bei der Verbindung einer Schaltgasse zur Vorwahl der Automatik-Funktionen mit einer Schaltkulisse zur manuellen Gangschaltung zusätzliche Synergieeffekte erzielt werden.

Die der Erfindung zugrunde liegende Aufgabe wird dadurch gelöst, daß in einer Stellung des Wählhebels innerhalb der H-förmigen Schaltkulisse ein Signal generiert wird, durch das ein weiteres Fahrprogramm aktiviert wird. Diese Stellung entspricht dem Bereich, in dem sich die Wählgasse und eine Schaltgasse der H-förmigen Schaltkulisse kreuzen. Durch die vorgeschlagene Lösung wird dem Fachmann der entscheidende Hinweis gegeben, wie eine funktionelle Verschmelzung einer Schalt- bzw. Wählgasse für Automatik-Funktionen mit einer Schaltkulisse für die Manuell-Funktionen erfolgen kann. Die Lösung erschöpft sich demnach nicht in der bloßen Aggregation einer Schalt- bzw. Wählgasse für Automatik-Funktionen und einer H-förmigen Schaltkulisse, sondern ermöglicht ein Fahren in sämtlichen Gängen des automatischen Getriebes mit zwei unterschiedlichen Fahrprogrammen.

Vorteilhafterweise ist als erstes Fahrprogramm ein verbrauchsoptimiertes Fahrprogramm D_E und ein leistungsorientiertes Fahrprogramm D_S als weiteres Fahrprogramm vorgesehen.

Bei einem bevorzugten Ausführungsbeispiel handelt es sich bei dem aktivierten Fahrprogramm um ein Fahrprogramm, bei dem alle Gänge bei einer leistungsorientierten Fahrweise zur Verfügung stehen. In der ersten Schaltgasse liegen die Automatik-üblichen Wählstellungen P, R, N und D_E. An diese Schaltgasse schließt sich die Schaltkulisse vorzugsweise so an, daß sich die Fahrprogramme D_E und D_S gegenüberliegen. Ihre räumliche Lage ist durch eine Quergasse getrennt.

Es hat sich als vorteilhaft erwiesen, den Wählhebel im Kreuzungsbereich der Wählgasse und der Schaltgasse federnd zu zentrieren. Durch diese Maßnahme wird der Wählhebel, nachdem er vom Fahrer losgelassen wurde, regelmäßig in eine Ausgangsstellung innerhalb der Schaltkulisse zurückgeführt.

Es ist vorteilhaft, wenn der Wählhebel zur manuellen Schaltung eines Ganges ein Gangschaltsignal generiert, das von einem elektronischen Steuergerät auf Zulässigkeit bzw. Plausibilität überprüft und weiterverarbeitet wird. So besteht eine vorteilhafte Möglichkeit darin, das generierte Gangschaltsignal nur dann zu akzeptieren, sofern der angewählte Gang in einem zulässigen Drehzahlbereich liegt.

Ein besonders gutes Schaltgefühl läßt sich dem Fahrer dann vermitteln, wenn ein akzeptiertes Gangschaltsignal dem Fahrer haptisch mitgeteilt wird. Es hat sich als sehr elegant erwiesen, wenn bei einem nicht akzeptierten Gangschaltsignal der Wählhebel in seine Ausgangsstellung D_S selbsttätig zurückgeführt wird.

Eine Möglichkeit, ein haptisches Signal zu erzeugen, besteht im Verrasten des Wählhebels in der jeweils angewählten Gangschaltstellung.

Bei einer weiteren Ausgestaltung der Schaltvorrichtung wird ein manuell geschalteter Gang bei untertouriger Fahrweise selbsttätig gelöst. Der Wählhebel wird entrastet und in seine Ausgangsstellung D_S zurückgeführt. Anschließend wird das Fahrprogramm D_S aktiviert, das selbsttätig eine gebotene Rückschaltung ausführt.

Um Fehlfunktionen auszuschalten, ist es besonders vorteilhaft, ein Zeitfenster zu aktivieren, wenn der Wählhebel die Wählstellung D_S erreicht. Das Fahrprogramm D_S wird erst nach Ablauf eines vorgebbaren Zeitintervalls aktiviert. Andererseits wird das Fahrprogramm D_S durch das aktivierte Zeitfenster nicht aufgerufen, wenn der Wählhebel lediglich die Wählstellung D_S überfährt.

Die vorgeschlagene Schaltvorrichtung kann selbstverständlich weitere Abwandlungen erfahren, ohne daß hierbei der Kern der Erfindung verlassen wird. Beispielsweise kann das Fahrprogramm D_S adaptiv, d. h. selbstlernend, ausgebildet sein, so daß dem jeweiligen Fahrertyp Rechnung getragen wird.

Zur manuellen Schaltung der verfügbaren Gänge ist die Verrastung des Wählhebels durch Handkraft außer Funktion zu bringen.

Die vorgeschlagenen Lösungen lassen sich auch bei einem automatischen Getriebe mit mehr als fünf Gängen einsetzen. In Frage kommt vor allem die Anwendung bei einem 6-Gang-Pkw-Getriebe oder einem Bus-Getriebe mit 8 Gängen.

Das Fahrprogramm, das aktiviert wird, wenn sich der Wählhebel in einer definierten Stellung innerhalb der H-förmigen Schaltkulisse befindet, kann nach beliebigen Strategien arbeiten. Dieses Fahrprogramm kann - zumindest teilweise - nach Fuzzy-Logik-Methoden, nach neuronaler Netz-Technik, nach analytischen Strategien oder nach einer Kombination mehrerer Strategien unter Verwendung von Schaltpunkten, -linien und -kennfeldern arbeiten.

Die mit der Erfindung erzielbaren Vorteile bestehen zusammenfassend darin, daß durch die vorgeschlagene Kombination der Automatik-Schaltgasse und der Manuell-Schaltkulisse eine funktionelle Verschmelzung der Automatik- und Manuell-Funktionen erreicht wird.

Weitere, für die Erfindung wesentliche Merkmale sowie die hieraus resultierenden Vorteile sind der nachfolgenden Beschreibung der Ausführungsbeispiele unter Bezugnahme auf die Zeichnungen näher erläutert.
Es zeigen:
- Fig. 1: eine schematische Ansicht einer Schaltvorrichtung mit einem Wählhebel und
- Fig. 2: eine Einzelheit der Schaltvorrichtung nach Fig. 1 in ebenfalls stark vereinfachter, schematischer Darstellung.

Eine erste Ausführungsform der Erfindung wird im folgenden am Beispiel eines elektrohydraulisch gesteuerten, automatischen 4-Gang-Getriebes mit den Programmen "Drive_ Economy, D_E" und den Schaltstellungen N (Neutral), R (Rückwärts) und P (Parken) näher erläuert.

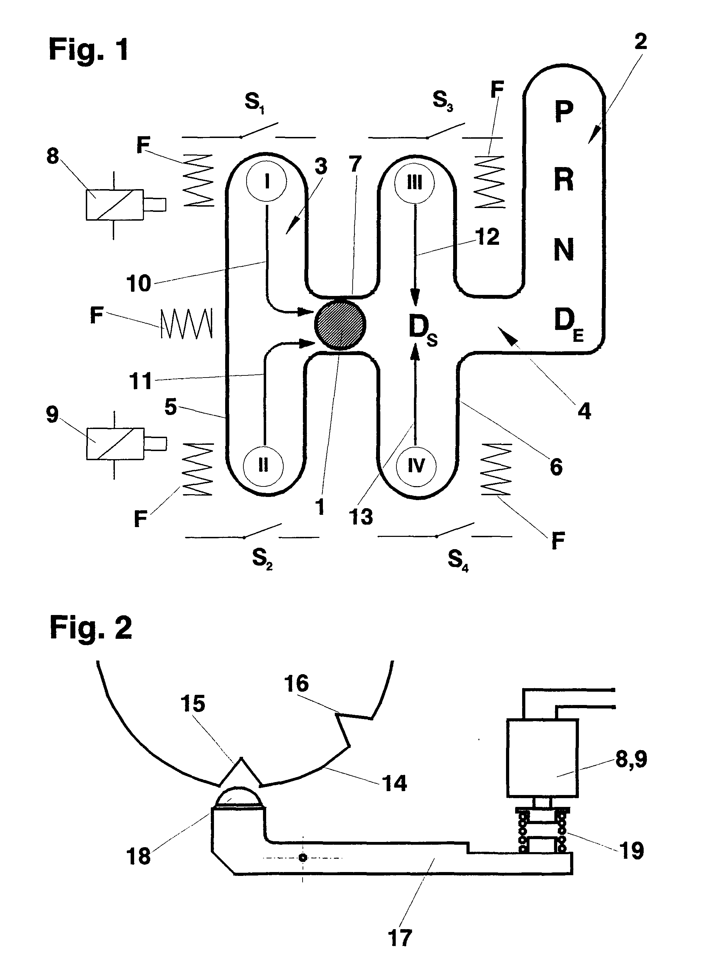

In Fig. 1 ist ein Wählhebel 1 mit einem kreisförmigen Querschnitt schraffiert abgebildet. Der Wählhebel 1 ist um einen nicht eingezeichneten Drehpunkt kardangelenkartig schwenkbar abgestützt und kann vom Fahrer in einer ersten Schaltgasse 2 verschwenkt werden. An die erste Schaltgasse 2 schließt sich eine H-förmige Schaltkulisse 3 an.

In der ersten Schaltgasse 2, der Automatik-Schaltgasse, ist die Anordnung der einzelnen Wählhebel-Positionen Automatik-üblich. Diese Schaltgasse enthält die Schaltpositionen P, R, N und D_E (Fahrprogramm bei verbrauchsorientierter Fahrweise).

Die Schaltgasse 2 kann ferner um die Automatik-üblichen Schaltpositionen 3, 2 und 1 ergänzt werden. Hier werden die möglichen Hochschaltungen begrenzt bzw. nicht zugelassen, wobei in der Position 1 die Kupplung für die Kraftübertragung bei Schubbetrieb im ersten Gang geschlossen wird.

Der Wählhebel 1 ist aus der Schaltgasse 2 aus der Schaltposition bzw. Programmwahl D_E über eine Quergasse 4 in die H-förmige Schaltkulisse 3 überführbar.

Die H-förmige Schaltkulisse 3 setzt sich aus zwei weiteren Schaltgassen 5 und 6, die über eine Wählgasse 7 miteinander verbunden sind, zusammen. Die Schaltkulisse 3 bietet dem Fahrer ein von einem viergängigen Handschaltgetriebe her gewohntes Bild. Selbstverständlich kann die Schaltkulisse 3 bedarfsweise um eine Gasse für mindestens einen weiteren Gang, so zum Beispiel einen fünften Gang, erweitert werden.

In der Schaltgasse 5 liegen sich die manuell zu schaltenden Gänge 1 und 2 und in der Schaltgasse 6 die Gänge 3 und 4 diametral gegenüber.

Wenn der Fahrer über den Wählhebel eine der mit I bis IV gekennzeichneten Gangschaltstellungen anwählt, wird der entsprechende Gang 1, 2, 3 oder 4 eingelegt. Hierzu wird ein diesem Gang zugeordneter elektrischer Schalter S1, S2, S3 oder S4 geschlossen. Es wird ein Gangschaltsignal generiert, das an ein selbst nicht dargestelltes elektronisches Steuergerät (EGS) weitergeleitet wird. Es ist zweckmäßig, die elektronische Steuerung so auszubilden, daß dieses Gangschaltsignal nur dann akzeptiert wird, sofern der angewählte Gang im erlaubten Drehzahlbereich liegt.

Der Vollständigkeit halber sei erwähnt, daß der Wählhebel 1 gegen die Kraft von Federn F in die Gangschaltstellungen überführt wird. Diese Federn F besorgen auch die Rückstellung des Wählhebels 1 in eine Ausgangslage - innerhalb der Schaltkulisse 3 -, sofern der Wählhebel 1 nicht verriegelt ist und vom Fahrer losgelassen, d. h. keine Handkraft ausgeübt, wird. Auf diese Ausgangslage wird weiter unten näher eingegangen.

Die Federn F, deren Wirkungsrichtungen in Längsrichtung der Schaltgassen 5 und 6 verlaufen, werden durch mindestens eine weitere, seitlich angeordnete Feder F ergänzt, um die erwähnte Ausgangslage des Wählhebels 1 in der Schaltkulisse 3 sicherzustellen. Die Wirkungsrichtung dieser weiteren Feder F verläuft gleichgerichtet zur Richtung der Wählgasse 7. Bei den Federn F kann es sich um Zug- und/ oder Druckfedern handeln. Anstelle der vorgeschlagenen Federn können gleichwirkende, elastische Elemente eingesetzt werden, die sicherstellen, daß der Wählhebel 1 in eine bestimmte Ausgangslage innerhalb der Schaltkulisse 3 überführt wird.

Zwei schematisch angedeutete Riegelmagnete 8 und 9 besorgen die Verrastung (Sicherung) des Wählhebels 1 in seinen möglichen Gangschaltstellungen. Es hat sich als ausreichend erwiesen, jeweils einen Riegelmagneten 8 bzw. 9 für die Gangschaltstellungen I und III bzw. II und IV vorzusehen. Selbstverständlich sind andere elektro-mechanisch oder hydraulisch wirkende Bauteile verwendbar, die eine Verriegelung des Wählhebels 1 in den erwähnten Gangschaltstellungen sicherstellen.

Wird einer der verfügbaren Gänge vom Fahrer angewählt und liegt dieser angewählte Gang im erlaubten Drehzahlbereich, wird das generierte Gangschaltsignal durch die Verrastung des Wählhebels 1 quittiert. Durch die Riegelmagnete oder andere geeignete Mittel wird nicht nur diese Verrastung sichergestellt. Durch diesen Vorgang wird dem Fahrer vielmehr auch ein haptisches Signal übermittelt. Hiermit kann ein sehr gutes Schaltgefühl realisiert werden.

Für den Fall, daß ein Gangschaltsignal nicht akzeptiert wird, hat es sich als sehr vorteilhaft erwiesen, den Wählhebel 1 nicht zu verriegeln, sondern die Rückstellkräfte der Federn F wirken zu lassen. Durch diese Rückstellkräfte wird der Wählhebel, nachdem er vom Fahrer losgelassen wurde, in die erwähnte Ausgangsstellung in der Schaltkulisse 3 zurückgeführt.

Bei einer möglichen Ausführungsform der Schaltvorrichtung hat sich folgende Funktion bewährt: Bei einer untertourigen Fahrweise in einem manuell geschalteten Gang wird über das elektronische Steuergerät eine Entriegelung des Wählhebels 1 ausgelöst. Dann wird der Wählhebel beim Unterschreiten einer unteren Drehzahlgrenze selbsttätig in die Ausgangsstellung innerhalb der Schaltkulisse 3 zurückgeführt. An diese Aktion kann sich ein weiterer Schritt, wie unten ausgeführt, anschließen.

Die in Fig. 1 eingezeichneten Pfeile 10, 11, 12 und 13 verdeutlichen die Rückführung des Wählhebels 1 in seine Ausgangslage in der Schaltkulisse 3.

Ein wesentliches Merkmal der vorliegenden Erfindung besteht nun darin, daß dem Bereich, in dem sich die Schaltgasse 6 der Gänge 3 und 4 mit der Wählgasse 7 bzw. der Quergasse 4 kreuzen, eine weitere Funktion des automatischen Getriebes zugeordnet ist. In dieser Schaltposition wird ein weiteres Fahrprogramm aufgerufen. Dieses Fahrprogramm kann an sich ebenfalls Automatik-üblich sein.

Die Besonderheit besteht nun aber auch darin, daß dieses an sich Automatik-übliche Fahrprogramm nicht der Schaltgasse 2, also der Automatik-Schaltgasse, zugeordnet ist. Diese Schaltposition bzw. dieses Fahrprogramm ist in einen Bereich der Schaltkulisse 3, also der Manuell-Schaltkulisse, verlagert. Hiermit läßt sich eine funktionelle Verschmelzung der Automatik- und Manuell-Funktionen erreichen, weil diese Schaltposition bzw. dieses Fahrprogramm sowohl von der Schaltgasse 2 als auch von der Schaltkulisse 3 aus (hier unter den gegebenen Voraussetzungen auch selbsttätig) erreichbar ist.

Die mehrfach erwähnte Ausgangslage des Wählhebels 1 innerhalb der Schaltkulisse 3 entspricht dieser zusätzlichen Schaltposition, so daß demnach der Wählhebel 1 ohne äußere Einwirkung in dieser Ausgangslage im Kreuzungsbereich der Wählgasse 7 und der Schaltgasse 6 federnd zentriert ist.

In der Abbildung nach Fig. 1 ist die zusätzliche Schaltposition in der H-förmigen Schaltkulisse 3 mit D_S gekennzeichnet. Bei dem zugehörigen Fahrprogramm handelt es sich um ein Fahrprogramm, bei dem sämtliche Gänge des automatischen Getriebes zur Verfügung stehen und das auf eine leistungsorientierte (sportliche) Fahrweise abgestimmt ist. Die Fahrprogramme D_E (Schaltgasse 2) und D_S liegen sich gegenüber, so daß ein Fahrprogrammwechsel immer von D_E nach D_S bzw. umgekehrt erfolgt.

Dieses Fahrprogramm D_S kann auch - je nach Fahrverhalten des Fahrers - adaptiv generiert werden.

Die vorstehend erläuterte Schaltvorrichtung ist für den Fahrer in mehrfacher Hinsicht von großem Vorteil: Einerseits ist ein gezielter Eingriff des Fahrers zur manuellen Gangwahl möglich. Der Fahrer kann auf besondere Straßenführungen oder besondere Verkehrssituationen intuitiv und effektiv reagieren. Andererseits kommt die atypische Positionierung des zusätzlichen Fahrprogramms D_S in der Schaltkulisse 3 den Intentionen des Fahrers entgegen, wenn dieser aus der Schaltgasse 2, die den Automatik-Funktionen vorbehalten ist, in die Schaltkulisse zur manuellen Gangwahl wechselt: Selbst wenn der Fahrer von der gegebenen Möglichkeit einer manuellen Gangwahl keinen Gebrauch macht, ist eine leistungsorientierte Fahrweise (die ja in den meisten Fällen der Auslöser für eine gewünschte manuelle Gangwahl ist) dennoch gegeben. Insofern ist die vorgeschlagene Lösung keine bloße Addition einer Schaltgasse mit Automatik-Funktionen und einer H-förmigen Schaltkulisse zur manuellen Gangwahl.

Wenn, wie oben erwähnt, in einem manuell geschalteten Gang eine untere Drehzahlgrenze unterschritten wird, besteht der besagte, sich an die selbsttätig ablaufende Entriegelung des Wählhebels anschließende weitere Schritt darin, daß der Wählhebel in die Ausgangsstellung D_S zurückgeführt wird. Das Fahrprogramm D_S wird aktiviert und es erfolgt eine Rückschaltung.

In Fig. 2 ist eine Möglichkeit zur Verriegelung des Wählhebels 1 schematisch angedeutet. In eine Nockenbahn 14 des Wählhebels 1 sind Kerben 15 und 16 eingearbeitet. Diese können beispielsweise dem dritten und vierten Gang zugeordnet sein. Ein zweiarmiger Winkelhebel 17 trägt an seinem freien Ende eine Rastkugel 18. Das andere Ende ist - unter Zwischenschaltung einer Druckfeder 19 - mit dem Riegelmagnet 8 bzw. 9 verbunden. Die schematisch angedeutete Verriegelungseinrichtung stellt eine Verriegelung bzw. Verrastung des Wählhebels 1 in einer der möglichen Gangschaltstellungen sicher. Andererseits ist diese Verrastung bei einem Gangwechsel durch Überwinden der Kraft der Druckfeder 19 überdrückbar.

Es ist schließlich vorteilhaft, ein Zeitfenster zu aktivieren, wenn der Wählhebel 1 seine Ausgangsstellung in der Schaltkulisse 3, d. h. die Wählstellung D_S, erreicht. Dieses Fahrprogramm wird sodann nach Ablauf eines vorgebbaren Zeitraums (zum Beispiel 0,2 sec) aktiviert. Der Aufruf des Fahrprogramms D_S unterbleibt jedoch, wenn der Wählhebel 1 die Wählstellung innerhalb dieses Zeitintervalls lediglich überfährt.

Sofern es sich bei der Schaltkulisse um eine solche für fünf oder mehr manuell schaltbare Gänge handelt, ist es vorteilhaft, die vorgeschlagene Ausgangsstellung des Wählhebels 1 im Kreuzungsbereich der Schaltgasse 6 und der Wählgasse 7 beizubehalten. Somit wird dann beim Verlassen der Schaltstellung für den fünften Gang ebenfalls das Fahrprogramm D_S aktiviert, sofern nicht ein anderer Gang manuell geschaltet wird.

Es ist möglich, daß ein Fahrprogramm aktiviert wird, wenn sich der Wählhebel in einem festgelegten Bereich innerhalb der H-förmigen Schaltkulisse 3 befindet. Dieser Bereich kann der Stellung entsprechen, in der sich die Wählgasse 7 und die Schaltgasse 6 der H-förmigen Schaltkulisse 3 kreuzen.

Ferner gilt, daß das aktivierbare Fahrprogramm - zumindest teilweise - nach Fuzzy-Logik-Methoden, neuronaler Netz-Technik, analytischer Strategien oder einer Kombination mehrerer Strategien unter Verwendung von Schaltpunkten, -linien und -kennfeldern arbeiten kann.

### Bezugszeichen

- 1: Wählhebel
- 2: Schaltgasse
- 3: Schaltkulisse
- 4: Quergasse
- 5: Schaltgasse
- 6: Schaltgasse
- 7: Wählgasse
- 8: Riegelmagnet
- 9: Riegelmagnet
- 10: Pfeil
- 11: Pfeil
- 12: Pfeil
- 13: Pfeil
- 14: Nockenbahn
- 15: Kerben
- 16: Kerben
- 17: Winkelhebel
- 18: Rastkugel
- 19: Druckfeder

## Patentansprüche

1. Schaltvorrichtung für ein automatisches Getriebe eines Kraftfahrzeugs, mit einem Wählhebel (1), der in einer ersten Schaltgasse (2) zwischen den Automatik-Wahlstufen verschwenkbar ist, und mit welchem die automatisch zu schaltenden Getriebegänge gemäß einem ersten Fahrprogramm vorwählbar sind und der über eine Quergasse (4) in eine H-förmige Schaltkulisse (3) mit einer Wählgasse (7) und weiteren Schaltgassen (5, 6) überführt werden kann, um die Getriebegänge manuell zu schalten, dadurch **gekennzeichnet,** daß, wenn der Wählhebel (1) sich in einer Stellung befindet, in der sich die Wählgasse (7) und die Schaltgasse (6) der H-förmigen Schaltkulisse (3) kreuzen, ein Signal generiert wird, durch das ein weiteres Fahrprogramm aktiviert wird.

2. Schaltvorrichtung nach Anspruch 1, dadurch **gekennzeichnet,** daß das erste Fahrprogramm ein verbrauchsoptimiertes Fahrprogramm D_E und das weitere Fahrprogramm ein leistungsorientiertes Fahrprogramm D_S ist.

3. Schaltvorrichtung nach Anspruch 2, dadurch **gekennzeichnet,** daß in der ersten Schaltgasse (2) die Wählstellungen P, R, N und D_E liegen.

4. Schaltvorrichtung nach den Ansprüchen 1 bis 3, dadurch **gekennzeichnet,** daß sich die Fahrprogramme D_E und D_S, getrennt durch die Quergasse (4) gegenüberliegen.

5. Schaltvorrichtung nach Anspruch 1, dadurch **gekennzeichnet,** daß der Wählhebel (1) im Kreuzungsbereich der Wählgasse (7) und der Schaltgasse (6) federnd zentriert ist.

6. Schaltvorrichtung nach Anspruch 2, dadurch **gekennzeichnet,** daß der Wählhebel (1) zur manuellen Schaltung eines Ganges ein Gangschaltsignal generiert, das von einem elektronischen Steuergerät akzeptiert wird, sofern der angewählte Gang im erlaubten Drehzahlbereich liegt.

7. Schaltvorrichtung nach Anspruch 6, dadurch **gekennzeichnet,** daß ein akzeptiertes Gangschaltsignal dem Fahrer haptisch mitgeteilt wird, während bei einem nicht akzeptierten Gangschaltsignal der Wählhebel (1) in seine Ausgangsstellung D_S selbsttätig zurückgeführt wird.

8. Schaltvorrichtung nach Anspruch 7, dadurch **gekennzeichnet,** daß das haptische Signal durch Verrasten des Wählhebels (1) in der angewählten Gangschaltstellung (I, II, III oder IV) generiert wird.

9. Schaltvorrichtung nach Anspruch 2, dadurch **gekennzeichnet,** daß ein manuell geschalteter Gang bei Erreichen einer unteren Drehzahlgrenze selbsttätig dadurch gelöst wird, daß der Wählhebel (1) entrastet und in seine Ausgangsstellung D_S zurückgeführt wird und anschließend durch das aktivierte Fahrprogramm D_S eine Rückschaltung ausgeführt wird.

10. Schaltvorrichtung nach Anspruch 2, dadurch **gekennzeichnet,** daß ein Zeitfenster aktiviert wird, wenn der Wählhebel die Wählstellung D_S erreicht, so daß das Fahrprogramm D_S nach Ablauf eines vorgebbaren Zeitintervalls aktiviert bzw. nicht aktiviert wird, wenn der Wählhebel die Wählstellung D_S lediglich überfährt.

11. Schaltvorrichtung nach den Ansprüchen 1 und 2, dadurch **gekennzeichnet,** daß das Fahrprogramm D_S adaptiv, bzw. selbstlernend ist.

12. Schaltvorrichtung nach Anspruch 8, dadurch **gekennzeichnet,** daß die Verrastungen des Wählhebels (1) in den Gangschaltstellungen (I bis IV) der Schaltkulisse (3) durch Handkraft außer Funktion gebracht werden können.

13. Schaltvorrichtung nach Anspruch 1 **gekennzeichnet** durch ein automatisches Getriebe mit mehr als fünf Gängen.

14. Schaltvorrichtung nach Anspruch 1 dadurch **gekennzeichnet**, daß die erste Schaltgasse (2) die Wählstellungen P, R, N, D, 5, 4, 3, 2 aufweist.

15. Schaltvorrichtung nach den Ansprüchen 1 oder 11, oder 13, dadurch **gekennzeichnet,** daß das aktivierte Fahrprogramm zumindest teilweise nach Fuzzy-Logik-Methoden, neuronaler Netz-Technik, analytischer Strategien oder einer Kombination mehrerer Strategien unter Verwendung von Schaltpunkten, -linien und -kennfeldern arbeitet.

## Claims

1. Shift device for an automatic motor vehicle transmission, with a selector lever (1), pivoted in a first shifting gate (2) between the automatic selector levels, and with which the gears to be shifted automatically are preselectable in accordance with a first drive program, and which via a transverse gate (4) can be moved to an H-formed shifting gate (3) with a selector gate (7) and further shifting gates (5, 6) for manual gearshifts, **characterized** in that if the selector lever (7) is in a position in which the selector gate (7) and the shift gate (6) of the H-formed shifting gate (3) cross, this generates a signal which activates a further drive program.

2. Shift device according to claim 1, **characterized** in that the first drive program is a consumptionoptimizing drive program (D_E) and the additional drive program is a performance-oriented drive program (D_S). (Continue with original claim 2 on page 16 of the application documents.)

3. Shift device according to claim 2, **characte rized** in that the selector positions P, R, N and D_E are located in the first shifting gate (2).

4. Shift device according to claims 1 to 3, **characterized** in that the drive programs D_E and D_S are located opposite each other, separated by the transverse gate (4).

5. Shift device according to claim 1, **characterized** in that the selector lever (1) is elastically centered in the intersection of the selector gate (7) and the shifting gate (6).

6. Shift device according to claim 2, **characterized** in that the selector lever (1) for manual gear shifts generates a gear selection signal, which is accepted by an electronic control unit if the gear selected is within the speed range permitted.

7. Shift device according to claim 6, **characterized** in that the driver is informed about the acceptance of a selection signal through haptic feedback, whereas if a gear selection signal is not accepted, the selector lever (1) will automatically return to its original position D_S.

8. Shift device according to claim 7, **characterized** in that the haptic feedback is generated by the engagement of the selector lever (1) in the selected gear selection position (I, II, III or IV).

9. Shift device according to claim 2, **characterized** in that when a lower speed level is reached, a manually selected gear is automatically cancelled by disengagement of the selector lever (1) and its return to its start position D_S and subsequently a down shift is implemented by the activated drive program D_S.

10. Shift device according to claim 2, **characterized** in that a time window is activated when the in that a time window is activated when the selector lever reaches the selector position D_S, so that the drive program D_S is activated after expiry of a specified time interval, or is not activated if the selector lever merely passes through the selector position D_S.

11. Shift device according to claims 1 and 2, **characterized** in that the drive program D_S is adaptable, i.e. self-learning.

12. Shift device according to claim 8, **characterized** in that engagement of the selector lever (1) in the gear selector positions (I to IV) of the selector gate (3) can be disengaged manually.

13. Shift device according to claim 1, **characterized** by an automatic transmission with more than five gears.

14. Shift device according to claim 1, **characterized** in that the first shifting gate (2) has the selector positions P, R, N, D, 5, 4, 3, 2.

15. Shift device according to claim 1 or 11, or 13, **characterized** in that the drive program activated at least partially functions according to the fuzzy-logic method, neuron network technology, analytical strategies or a combination of various strategies using shift points, shift lines and shift characteristics.

## Revendications

1. Dispositif de passage de vitesse pour une transmission automatique d'un véhicule automobile, doté d'un levier de sélection (1), qui, dans un premier couloir de passage (2) peut être déplacé entre les positions de marche automatique, et qui permet de présélectionner les rapports de boîte à engager automatiquement suivant un premier programme de conduite et qui peut être déplacé, en passant par un couloir transversal (4), dans une grille de guidage en simple H (3) dotée d'une grille de sélection (7) et d'autres grilles de passage (5, 6), afin de pouvoir passer les rapports de boîte de façon manuelle,
**caractérisé** en ce que, lorsque le levier de sélection (1) se trouve dans une position dans laquelle se creusent le couloir de sélection (7) et le couloir de passage (6) de la coulisse de guidage en simple H (3), est généré un signal provoquant l'activation d'un autre programme de conduite.

2. Dispositif de passage de vitesse selon la revendication 1, **caractérisé** en ce que le premier programme de conduite est un programme de conduite économique (D_E) et l'autre programme de conduite est un programme de conduite sportive (D_S).

3. Dispositif de passage de vitesse selon les revendications 1 et 2, **caractérisé** en ce que les positions de sélection P, R, N et D_E se trouvent dans le premier couloir de passage (2).

4. Dispositif de passage de vitesse selon les revendications 1 à 3, **caractérisé** en ce que les programmes de conduite D_E et D_S, séparés par le couloir transversal, sont opposés.

5. Dispositif de passage de vitesse selon la revendication 1, **caractérisé** en ce que le levier de sélection (1) est monté centré sur ressort dans la zone d'intersection du couloir de sélection (7) et du couloir de passage (6).

6. Dispositif de passage de vitesse selon la revendication 2, **caractérisé** en ce que le levier de sélection (1) génère un signal de passage de vitesse pour le changement manuel d'un rapport qui est acquitté par un boîtier de commande électronique si le rapport sélectionné se trouve dans la plage de régime autorisée.

7. Dispositif de passage de vitesse selon la revendication 6, **caractérisé** en ce qu'un signal de passage de vitesse acquitté est communiqué au conducteur par voie tactile, tandis qu'en cas d'un signal de passage de vitesse pas accepté le levier de sélection (1) est ramené automatiquement à sa position d'origine D_S.

8. Dispositif de passage de vitesse selon la revendication 7, **caractérisé** en ce que le signal tactile est généré par le verrouillage du levier de sélection (1) dans la position de passage de vitesse sélectionnée (I, II, III ou IV).

9. Dispositif de passage de vitesse selon la revendication 2, **caractérisé** en ce qu'un rapport engagé manuellement est désengagé automatiquement, dès qu'un seuil de régime inférieur est atteint, en déverrouillant le levier de sélection (1) et en l'amenant à sa position d'origine D_S et en effectuant, ensuite, à l'aide du programme de conduite actif D_S une rétrogradation.

10. Dispositif de passage de vitesse selon la revendication 2, **caractérisé** en ce qu'un laps de temps est activé lorsque le levier a atteint la position de sélection D_S, sachant que après écoulement d'une période prédéterminable le programme de conduite D_S sera activé ou pas activé, lorsque le levier de sélection passe simplement par la position de sélection D_S.

11. Dispositif de passage de vitesse selon les revendications 1 et 2, **caractérisé** en ce que le programme de conduite D_S est un programme auto-adaptif ou intelligent.

12. Dispositif de passage de vitesse selon la revendication 8, **caractérisé** en ce que les crans d'arrêt du levier de sélection (1) dans les positions de passage de vitesse (I - IV) de la coulisse de guidage (3) peuvent être mis hors service par force manuelle.

13. Dispositif de passage de vitesse selon la revendication 1, **caractérisé** en ce qu'il s'agit d'une boîte de vitesses automatique à plus de cinq rapports.

14. Dispositif de passage de vitesse selon la revendication 1, **caractérisé** en ce que le premier couloir de passage (2) présente les positions de sélection P, R, N, D, 5, 4, 3 et 2.

15. Dispositif de passage de vitesse selon les revendications 1 ou 11 ou 13, **caractérisé** en ce que le programme de conduite activé fonctionne, au moins partiellement, selon des méthodes de la logique floue, de la technologie des réseaux neuronaux, de stratégies analytiques ou d'une combinaison de plusieurs stratégies, en utilisant des points de passage de vitesse, des lois de passage et des cartographies.
